(19) Europäisches Patentamt
European Patent Office
Office européen des brevets

(11) EP 2 096 646 A1

(12) **EUROPEAN PATENT APPLICATION**
published in accordance with Art. 153(4) EPC

(43) Date of publication:
**02.09.2009 Bulletin 2009/36**

(21) Application number: **07849963.9**

(22) Date of filing: **26.11.2007**

(51) Int Cl.:
***H01B 13/00*** *(2006.01)* ***C08G 75/23*** *(2006.01)*
***C08G 81/00*** *(2006.01)* ***C08J 5/22*** *(2006.01)*
***H01B 1/06*** *(2006.01)* ***H01M 8/02*** *(2006.01)*
***H01M 8/10*** *(2006.01)*

(86) International application number:
**PCT/JP2007/073258**

(87) International publication number:
**WO 2008/066186 (05.06.2008 Gazette 2008/23)**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **27.11.2006 JP 2006318297**

(71) Applicant: **Sumitomo Chemical Company, Limited**
**Tokyo 104-8260 (JP)**

(72) Inventor: **NODONO, Mitsunori**
**Tsukuba-shi**
**Ibaraki 305-0045 (JP)**

(74) Representative: **Vossius & Partner**
**Siebertstraße 4**
**81675 München (DE)**

# (54) METHOD FOR PRODUCING POLYMER ELECTROLYTE MEMBRANE AND POLYMER ELECTROLYTE MEMBRANE

(57) A method for producing a polymer electrolyte membrane including:
(i) a preparation step for preparing a polymer electrolyte solution by dissolving a polymer electrolyte containing an ion conductive polymer having an ion-exchange group in an organic solvent capable of dissolving the polymer electrolyte,
(ii) a coating step for obtaining a polymer electrolyte membrane intermediate containing the ion conductive polymer by a solution casting method using the polymer electrolyte solution obtained in the step (i), and
(iii) a washing step for washing the polymer electrolyte membrane intermediate obtained in the step (ii) by bringing the polymer electrolyte membrane intermediate into contact with a washing solvent; wherein
the concentration of the organic solvent in the washing solvent brought into contact with the polymer electrolyte membrane intermediate in the washing step (iii) is 2500 ppm by weight or lower.

EP 2 096 646 A1

## Description

TECHNICAL FIELD

The present invention relates to a method for producing a polymer electrolyte membrane preferably usable as an ion conductive membrane of a polymer electrolyte fuel cell and a polymer electrolyte membrane obtained by the production method.

BACKGROUND ART

As for a fuel cell to be mounted on automobiles or the like, since easily providing high voltage and high electric current, a polymer electrolyte fuel cell using a polymer electrolyte membrane has highly been expected. The polymer electrolyte fuel cell includes so-called stack in which a pair of electrode catalyst layers are provided to a polymer electrolyte membrane having ion conductivity and a plurality of layers of a membrane-electrode assembly (hereinafter, sometimes also referred to as "MEA") are laminated.

As a method for producing the polymer electrolyte membrane to be used for the above MEA, a technique, commonly so-called solution casting method, has been employed widely. This solution casting method is a method for obtaining a polymer electrolyte membrane on a supporting substrate by obtaining a coating film with casting a solution prepared by dissolving a polymer electrolyte in a solvent onto the supporting substrate and removing the solvent from the coating film. Generally, to remove the solvent from the coating film, dry and removal of the solvent by heating treatment is employed.

Proposed as a method for improving solvent removal property from the coating film is a method of immersing a film from which the solvent is evaporated and removed by heating treatment into water while applying ultrasonic wave (see Japanese Patent Application Laid-Open (JP-A) No. 2005-125705).

DISCLOSURE OF THE INVENTION

The above solution casting method is a method useful as a method for industrially producing a polymer electrolyte membrane since it is simple. However, when a polymer electrolyte membrane is to be produced by use of this solution casting method, appearance defects such as wrinkles occur on the membrane surface in some cases. In the case of producing MEA using a polymer electrolyte membrane having such wrinkles, attributed to loosening because of the wrinkles, it sometimes becomes difficult to form an electrode catalyst layer reliably having a desired shape and size on the polymer electrolyte membrane and in some cases, strains are applied to the membrane from the starting points of wrinkles and it sometimes also affects the durability of the MEA and as a result, there is a problem that it is impossible to obtain a practically usable fuel cell.

Particularly, with respect to the method proposed in JP-A No. 2005-1257805, because of the action of ultrasonic radiation, the surface of the polymer electrolyte membrane tends to be roughened easily and it may possibly lead to a risk of promotion of appearance defects such as wrinkles and thus the characteristics of the polymer electrolyte membrane are easily deteriorated. Further, there is also a problem that the facilities become complicated.

In view of the above state of the art, it is an object of the present invention to provide a method for producing a polymer electrolyte membrane by a solution casting method, which is capable of sufficiently preventing appearance defects such as wrinkles. Further, it is an object to provide a polymer electrolyte membrane obtained by such a production method and suitable for a fuel cell.

The present inventors have made various investigations to solve the above problems and finally have completed the present invention.

That is, the present invention provides the following <1>.

<1> A method for producing a polymer electrolyte membrane including:

(i) a preparation step for preparing a polymer electrolyte solution by dissolving a polymer electrolyte containing an ion conductive polymer having an ion-exchange group in an organic solvent capable of dissolving the polymer electrolyte,
(ii) a coating step for obtaining a polymer electrolyte membrane intermediate containing the ion conductive polymer by a solution casting method using the polymer electrolyte solution obtained in the step (i), and
(iii) a washing step for washing the polymer electrolyte membrane intermediate obtained in the step (ii) by bringing the polymer electrolyte membrane intermediate into contact with a washing solvent; wherein
the concentration of the organic solvent in the washing solvent brought into contact with the polymer electrolyte membrane intermediate in the washing step (iii) is 2500 ppm by weight or lower.

Further, the present invention provides the following <2> to <12> as embodiments according to above <1>.
<2> The method for producing a polymer electrolyte membrane according to <1>, wherein the coating step (ii) is a step for obtaining the polymer electrolyte membrane intermediate on a supporting substrate by casting the polymer electrolyte solution onto the supporting substrate and thereafter carrying out heating treatment.
<3> The method for producing a polymer electrolyte membrane according to <1> or <2>, wherein the polymer electrolyte solution contains at least one organic solvent having a boiling point of 150°C or higher at 101.3 kPa.
<4> The method for producing a polymer electrolyte membrane according to any of <1> to <3>, wherein the ion conductive polymer includes an aromatic ring constituting the main chain and the ion-exchange group directly bonded or indirectly bonded through another atom or an atomic group to the aromatic ring constituting the main chain.
<5> The method for producing a polymer electrolyte membrane according to any of <1> to <3>, wherein the ion conductive polymer is a polymer having an aromatic ring constituting the main chain and optionally further having an aromatic ring in a side chain, and in which the ion-exchange group is directly bonded to the aromatic ring of at least one of the aromatic ring constituting the main chain and the aromatic ring in a side chain.
<6> The method for producing a polymer electrolyte membrane according to any of <1> to <5>, wherein the ion conductive polymer includes:

one or more structure units having an ion-exchange group selected from the following (1a), (2a), (3a) and (4a), (hereinafter, sometimes abbreviated as "(la) to (4a)")

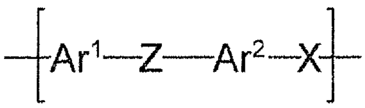
(1a)

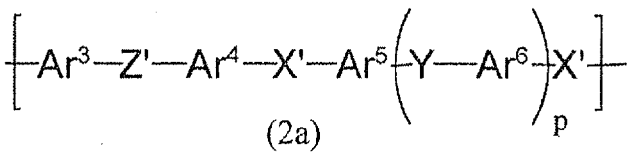
(2a)

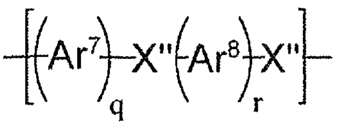
(3a)

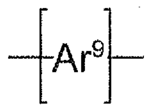
(4a)

(wherein, $Ar^1$ to $Ar^9$ each independently denote a divalent aromatic group having an aromatic ring constituting the main chain, optionally further having an aromatic ring in a side chain and having an ion-exchange group bonded directly to either the aromatic ring constituting the main chain or the aromatic ring in a side chain; Z and Z' each independently denote -CO- or $-SO_2-$; X, X', and X" each independently denote -O- or -S-; Y denotes a direct bond or a group defined by the following formula (100); p denotes 0, 1, or 2; and q and r each independently denote 1, 2, or 3) and
one or more structure units having no ion-exchange group selected from the following (1b), (2b), (3b) and (4b), (hereinafter, sometimes abbreviated as "(1b) to (4b)")

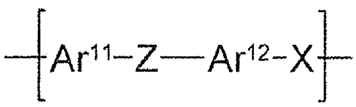
(1b)

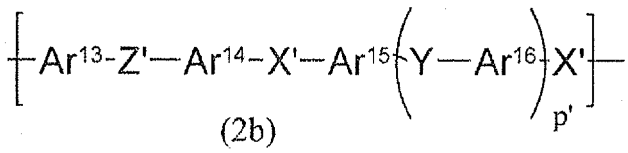
(2b)

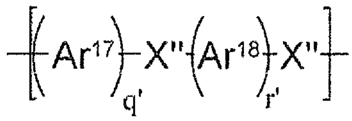

(3b)

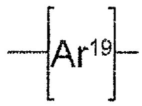

(4b)

(wherein, $Ar^{11}$ to $Ar^{19}$ each independently denote a divalent aromatic group optionally having a substituent group; Z and Z' each independently denote -CO- or $-SO_2-$; X, X', and X" each independently denote -O- or -S-; Y denotes a direct bond or a group defined by the following formula (100); p' denotes 0, 1, or 2; and q' and r' each independently denote 1, 2, or 3);

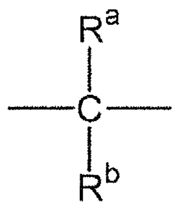

(100)

(wherein, $R^a$ and $R^b$ each independently denote a hydrogen atom, an optionally substituted alkyl group having 1 to 10 carbon atoms, an optionally substituted alkoxy group having 1 to 10 carbon atoms, an optionally substituted aryl group having 6 to 18 carbon atoms, an optionally substituted aryloxy group having 6 to 18 carbon atoms, or an optionally substituted acyl group having 2 to 20 carbon atoms and $R^a$ and $R^b$ may be bonded with each other to form a ring in combination with the carbon atoms to which they bond).

<7> The method for producing a polymer electrolyte membrane according to any of <1> to <6>, wherein the ion conductive polymer is a copolymer including one or more blocks (A) having an ion-exchange group and one or more blocks (B) having substantially no ion-exchange group, respectively, in which the copolymerization mode is block copolymerization or graft copolymerization.
<8> The method for producing a polymer electrolyte membrane according to <7>, wherein the ion conductive polymer includes a block in which the ion-exchange groups is directly bonded to the aromatic ring constituting the main chain as the blocks (A) having ion-exchange groups.
<9> The method for producing a polymer electrolyte membrane according to <7> or <8>, wherein the ion conductive polymer includes, as the blocks (A) a having ion-exchange group, a block represented by the following formula (4a')

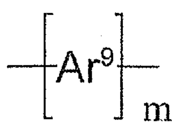

(4a')

(wherein, $Ar^9$ is defined the same as described above and m denotes a polymerization degree of the structure unit constituting the block) and, as the blocks (B) having substantially no ion-exchange group, one or more blocks selected from the following formulas (1b'), (2b') and (3b')

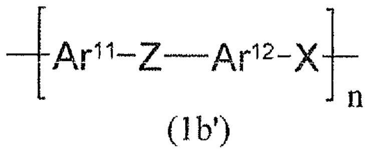

(1b')

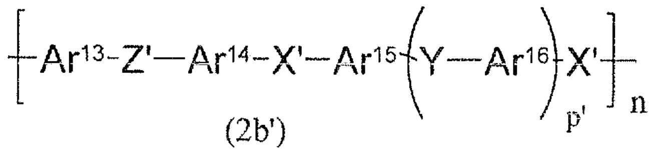

(2b')

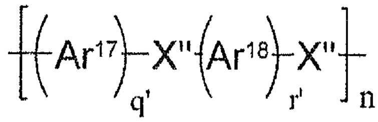

(3b')

(wherein, $Ar^{11}$ to $Ar^{18}$ each independently denote a divalent aromatic group and herein, the divalent aromatic group may be substituted with an alkyl group having 1 to 20 carbon atoms, an alkoxy group having 1 to 20 carbon atoms, an aryl group having 6 to 20 carbon atoms, an aryloxy group having 6 to 20 carbon atoms, and an acyl group having 2 to 20 carbon atoms; n denotes a polymerization degree of the structure unit constituting the block and an integer of 5 or higher; and other reference characters denote the same as described above).

<10> The method for producing a polymer electrolyte membrane according to any of <1> to <9>, wherein the polymer electrolyte membrane has a structure microphase-separated into at least two or more micro-phases.

<11> The method for producing a polymer electrolyte membrane according to <10>, wherein the ion conductive polymer is a copolymer including one or more blocks (A) having an ion-exchange group and one or more blocks (B) having substantially no ion-exchange group, respectively, in which the copolymerization mode is block copolymerization or graft copolymerization and the polymer electrolyte membrane includes a micro-phase separated structure containing a phase having density of the blocks (A) having an ion-exchange group higher than that of the blocks (B) having substantially no ion-exchange group and a phase having density of the blocks (B) having substantially no ion-exchange group higher than that of the blocks (A) having an ion-exchange group.

<12> The method for producing a polymer electrolyte membrane according to any of <1> to <11>, wherein the ion-exchange group is a sulfonic acid group.

<13> The method for producing a polymer electrolyte membrane according to any of c<1> to <12>, wherein the ion conductive polymer is a hydrocarbon type ion conductive polymer having 15% by weight or lower of halogen atoms based on the elemental weight ratio.

Further, the present invention provides polymer electrolyte membranes of the following <14> to <16>.

<14> A polymer electrolyte membrane obtained by the production method according to any of <1> to <13>.

<15> The polymer electrolyte membrane according to <14>, wherein the content of the organic solvent in the polymer electrolyte membrane is 6000 ppm by weight or less based on the total weight of the polymer electrolyte membrane.

<16> A polymer electrolyte membrane comprising an polymer electrolyte containing an ion conductive polymer having a ion-exchange group, wherein the content of an organic solvent capable of dissolving the polymer electrolyte in the polymer electrolyte membrane is 6000 ppm by weight or less based on the total weight of the polymer electrolyte membrane.

The present invention also provides a membrane electrolyte assembly (MEA) having any of the polymer electrolyte membrane and a fuel cell including the MEA.

The present invention makes it possible to obtain a polymer electrolyte membrane with sufficiently prevented appearance abnormality such as wrinkles in polymer electrolyte membrane production by a solution casting method. Such a polymer electrolyte membrane is expected for use in various fields including a fuel cell. Further, the present invention can be carried out easily with no need of complicated facilities and therefore, is particularly advantageous as an industrial production method for a polymer electrolyte membrane and is remarkably useful for industries.

MODE FOR CARRYING OUT THE INVENTION

Hereinafter, preferred embodiments of the present invention will be described.

Then method for producing a polymer electrolyte membrane of the present invention is a production method involving the above respective steps (i), (ii) and (iii), wherein the concentration of the organic solvent (hereinafter, referred

to as "solubilizing organic solvent") contained in the washing solvent brought into contact with the polymer electrolyte membrane intermediate in the washing step (iii) and capable of dissolving the polymer electrolyte membrane is 2500 ppm by weight or lower.

The above polymer electrolyte membrane intermediate contains the ion conductive polymer and further the solubilizing organic solvent used in the polymer electrolyte solution. The above washing step (iii) is a step for removing the solubilizing organic solvent from the polymer electrolyte membrane intermediate obtained through the coating step (ii) and the solubilizing organic solvent is extracted into the washing solvent from the polymer electrolyte membrane intermediate by bringing the polymer electrolyte membrane intermediate and the washing solvent into contact with each other. In such a manner, the concentration of the solubilizing organic solvent in the washing solvent is increased and the present invention is completed based on the finding that the removal of the solubilizing organic solvent from the polymer electrolyte membrane intermediate can be carried out efficiently by adjusting the concentration of the solubilizing organic solvent in the washing solvent brought into contact with the polymer electrolyte membrane intermediate to 2500 ppm by weight or lower in the washing step (iii), preferably, by keeping the concentration of the solubilizing organic solvent in the washing solvent brought into contact with the polymer electrolyte membrane intermediate constantly 2500 ppm by weight or lower in the washing step (iii).

Herein, the above washing solvent will be described briefly. As described above, in the washing solvent, the concentration of the solubilizing organic solvent is fluctuated during the washing step (iii). At first, washing solvents to be employed before being contact with the polymer electrolyte membrane intermediate (hereinafter, sometimes referred to as "initial washing solvent") are those different from the solubilizing organic solvent and easy to extract the solubilizing organic solvent. This initial washing solvent may be selected properly based on the type of the ion conductive polymer employed. The above washing solvent means a concept including the initial washing solvent and a solubilizing organic solvent extracted into the initial washing solvent from the polymer electrolyte membrane intermediate.

The present inventors presume that in the polymer electrolyte membrane production by the solution casting method, the appearance abnormality such as wrinkles occurring on the resulting polymer electrolyte membrane is caused by a small amount of an organic solvent contained in the polymer electrolyte membrane, particularly the solvent (solubilizing organic solvent) which is employed for producing the polymer electrolyte solution to be used for the solution casting method and which is capable of dissolving the ion conductive polymer and based on this assumption, the present inventors have found that the appearance abnormality of the polymer electrolyte membrane can drastically be suppressed by lowering the content of the solubilizing organic solvent in the polymer electrolyte membrane to 6000 ppm by weight or lower. Further, the present inventors have had a unique finding that the polymer electrolyte membrane having a content of the solubilizing organic solvent exceeding 6000 ppm by weight is easy to cause the appearance abnormality such as wrinkles (hereinafter, sometimes referred to as "wrinkles or the like") and particularly, wrinkles or the like are easily generated at the time of peeling and removing the supporting substrate.

Accordingly, the present invention aims to provide a method for simply producing a polymer electrolyte membrane having a solubilizing organic solvent content of 6000 ppm by weight or lower and capable of remarkably well suppressing wrinkles or the like and a polymer electrolyte membrane obtained by the production method.

At first, the polymer electrolyte membrane will be specifically described which is produced by the production method of the present invention. The polymer electrolyte mainly constituted by the polymer electrolyte membrane is a polymer electrolyte containing at least one ion conductive polymer and the polymer electrolyte has an ion conductive polymer content of 50% by weight or more, preferably 70% by weight or more, and particularly preferably 90% by weight or more.

The ion conductive polymer is a polymer having an ion-exchange group, which means a polymer having an ion-exchange group to an extent of exhibiting ion conductivity when it is used as an ion conductive membrane for a fuel cell. Particularly, a polymer having an ion-exchange group (proton-exchange group) exhibiting proton conductivity is preferable and examples thereof include proton-exchange groups typified by a sulfonic acid group ($-SO_3H$), a phosphonic acid group ($-PO_3H_2$), a phosphoric acid group ($-OPO_3H_2$), a sulfonylimido group ($-SO_2-NH-SO_2-$), and a carboxyl group (-COOH). Among these proton-exchange groups, a sulfonic acid group is particularly preferable. In the production method of the present invention, an ion conductive polymer in which these proton-exchange groups may be partially or entirely exchanged with metal ions or the like to form salts may be used; however for the purpose of well suppressing wrinkles or the like, it is preferable to use an ion conductive polymer in which substantially all of proton-exchange groups exist in a free acid state. Further, the ion conductive polymer in which substantially all of proton-exchange groups exist in a free acid state is advantageous in the case where it is employed for an ion conductive membrane for a fuel cell.

The introduction amount of the ion-exchange group in the ion conductive polymer is, based on the number of ion-exchange groups per unit weight of the ion conductive polymer, that is, ion-exchange capacity, preferably 0.5 meq/g to 4.0 meq/g and more preferably 1.0 meq/g to 2.8 meq/g. If the ion-exchange capacity is 0.5 meq/g or higher, the ion conductivity of the resulting polymer electrolyte membrane is sufficiently exhibited and on the other hand, if the ion-exchange capacity is 4.0 meq/g or lower, the water resistance of the polymer electrolyte membrane becomes well and in both cases, the properties as a polymer electrolyte membrane for a fuel cell become excellent and thus the range is

preferable.

The ion conductive polymer may include fluoro type ion conductive polymers typified by Nafion (registered trade mark of Du Pont) and hydrocarbon type ion conductive polymers and particularly hydrocarbon type ion conductive polymers are preferable.

Examples of the preferable hydrocarbon type ion conductive polymers are engineering resins having aromatic rings in the main chains such as polyether ether ketones, polyether ketones, polyether sulfones, polyphenylene sulfides, polyphenylene ethers, polyether ether sulfones, polyphenylenes, and polyimides and those obtained by introducing proton-exchange groups exemplified above into widely commercialized resins such as polyethylenes and polystyrenes.

The hydrocarbon type ion conductive polymers are typically those containing no halogen atom such as fluorine at all, however, they may partially contain a fluorine atom. However, from the viewpoint of the cost, if polymers contain substantially no fluorine atom, the polymers have advantage that they are economical as compared with fluoro type ion conductive polymers. More preferably, it is desired that the halogen atom such as a fluorine atom is contained 15 % by weight or less based on elemental weight ratio constituting the ion conductive polymers.

As the hydrocarbon type ion conductive polymers, those having aromatic rings in the main chains are preferable, and particularly preferable are polymers having aromatic rings constituting the main chains and ion-exchange groups directly bonded to the aromatic rings or polymers having ion-exchange groups indirectly bonded to the aromatic rings through another atom or atom groups; or polymers having aromatic rings constituting the main chains, further optionally having side chains including aromatic rings and having ion-exchange groups directly bonded to either aromatic rings constituting the main chains and the aromatic rings of the side chains.

From the viewpoint of heat resistance, the hydrocarbon type ion conductive polymers are preferable which are aromatic hydrocarbon type polymers having aromatic rings in the main chains and ion-exchange groups.

Further, from the viewpoint of easiness of exhibiting good mechanical strength of the polymer electrolyte membrane in the case of obtaining a polymer electrolyte membrane containing the above hydrocarbon type ion conductive polymers, the hydrocarbon type ion conductive polymers are preferably copolymers each containing a structure unit having an ion-exchange group and a structure unit having no ion-exchange group, obtained by combining these structure units, and having the ion-exchange capacity within the above range. Copolymerization modes of such copolymers may be random copolymerization, block copolymerization, graft copolymerization, alternating copolymerization, or combination of these copolymerization modes.

Preferable examples of the structure unit having an ion-exchange group are those selected from the following (1a) to (4a) and may be the hydrocarbon type ion conductive polymers containing two or more of these units.

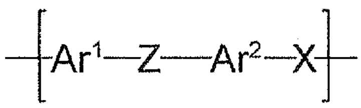

(1a)

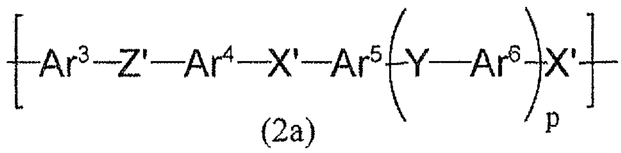

(2a)

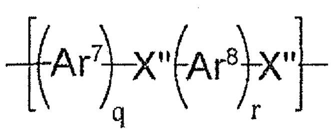

(3a)

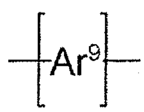

(4a)

(wherein, $Ar^1$ to $Ar^9$ each independently denote a divalent aromatic group having an aromatic ring constituting the main chain, optionally further having an aromatic ring in a side chain and having an ion-exchange group bonded directly to either the aromatic ring constituting the main chain or the aromatic ring in a side chain; Z and Z' each independently denote -CO- or $-SO_2-$; X, X', and X" each independently denote -O- or -S-; Y denotes a direct bond or a group defined by the above-mentioned formula (10); p denotes 0, 1, or 2; and q and r each independently denote 1, 2, or 3.)

Further, preferable examples of the structure unit having no ion-exchange group are those selected from the following (1b) to (4b) and may be the hydrocarbon type ion conductive polymers containing two or more types of these units.

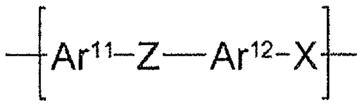

(1b)

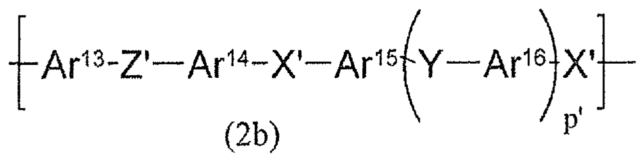

(2b)

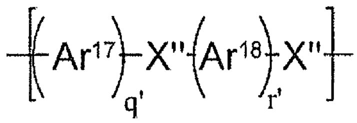

(3b)

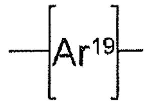

(4b)

(wherein, $Ar^{11}$ to $Ar^{19}$ each independently denote a divalent aromatic group optionally having a substituent group; Z and Z' each independently denote -CO- or $-SO_2-$; X, X', and X" each independently denote -O- or -S-; Y denotes a direct bond or a group defined by the above-mentioned formula (10); p' denotes 0, 1, or 2; and q' and r' each independently denote 1, 2, or 3.)

The ion conductive polymer to be used for the present invention is preferably a copolymer containing, as structure units, a structure unit having an ion-exchange group one or more of the above formulas (1a) to (4a) and a structure unit having no ion-exchange group of one or more of the above formulas (1b) to (4b).

$Ar^1$ to $Ar^9$ in the formulas (1a) to (4a) denote a divalent aromatic group. Examples of the divalent aromatic group include divalent monocyclic aromatic groups such as 1,3-phenylene and 1,4-phenylene; divalent condensed ring type aromatic groups such as 1,3-naphthalenediyl, 1,4-naphthalenediyl, 1,5-naphthalenediyl, 1,6-naphthalenediyl, 1,7-naphthalenediyl, 2,6-naphthalenediyl, and 2,7-naphthalenediyl; and hetero aromatic groups such as pyridinediyl, quinoxalinediyl, and thiophenediyl. A divalent monocyclic aromatic group is preferable.

Further, $Ar^1$ to $Ar^9$ may be substituted with a fluorine atom, an optionally substituted alkyl group having 1 to 10 carbon atoms, an optionally substituted alkoxy group having 1 to 10 carbon atoms, an optionally substituted aryl group having 6 to 18 carbon atoms, an optionally substituted aryloxy group having 6 to 18 carbon atoms, and an optionally substituted acyl group having 2 to 20 carbon atoms.

$Ar^1$ and/or $Ar^2$ in the structure unit defined by the formula (1a), one or more of $Ar^1$ to $Ar^3$ of the structure unit defined by the formula (2a), $Ar^7$ and/or $Ar^8$ in the structure unit defined by the formula (3a), and $Ar^9$ in the structure unit defined by the formula (4a) have at least one ion-exchange group each in the aromatic rings constituting the main chains. As the ion-exchange group, a sulfonic acid group is preferable as described above.

Preferable examples of the above substituent group are as follows.

Examples of the alkyl group include a methyl group and an ethyl group; examples of the alkoxy group include a methoxy group and an ethoxy group; examples of the aryl group include a phenyl group and a naphthyl group; examples of the aryloxy group include a phenoxy group and a naphthyloxy group; and examples of the acyl group include an acetyl group and a propionyl group. As the above substituent group, those having less carbon atoms constituting them are preferable.

$Ar^{11}$ to $Ar^{19}$ in the formulas (1b) to (4b) denote a divalent aromatic group. Examples of the divalent aromatic group may include divalent monocyclic aromatic groups such as 1,3-phenylene and 1,4-phenylene; divalent condensed ring type aromatic groups such as 1,3-naphthalenediyl, 1,4-naphthalenediyl, 1,5-naphthalenediyl, 1,6-naphthalenediyl, 1,7-naphthalenediyl, 2,6-naphthalenediyl, and 2,7-naphthalenediyl; and hetero aromatic groups such as pyridinediyl, quinoxalinediyl, and thiophenediyl. A divalent monocyclic aromatic group is preferable.

Further, $Ar^{11}$ to $Ar^{19}$ may have a substituent group as described above and specificl examples of the substituent group are the same as described as the substituent groups for $Ar^1$ to $Ar^9$.

The ion conductive polymer to be employed in the present invention may include a structure unit having an ion-exchange group and a structure unit having no ion-exchange group and the copolymerization mode may be any of the above modes; however, particularly, block copolymerization or graft copolymerization is preferable. That is, a block copolymer or a graft copolymer having one or more blocks (A) having an ion-exchange group and one or more blocks (B) having substantially no ion-exchange group, respectively, is more preferable and a block copolymer is even more preferable. Here, the graft copolymer means a polymer of a structure including a molecular chain comprising the block (A) and the block (B) as a side chain or a polymer of a structure including a molecular chain comprising the block (B) and the block (A) as a side chain.

Herein, "a block having an ion-exchange group" means a block having 0.5 or more on average of ion-exchange groups per one structure unit constituting the block and if the block has 1.0 or more on average of ion-exchange groups per one structure unit, it is more preferable.

On the other hand, "a block having substantially no ion-exchange group" means a block having less than 0.5 on average of ion-exchange groups per one structure unit constituting the block and if the block has 0.1 or less on average of ion-exchange groups per one structure unit, it is more preferable and if 0.05 or less on average, it is even more preferable.

In the case where the above ion conductive polymer is a proper block copolymer or a graft copolymer, the polymerization degree m of the block (A) having an ion-exchange group is preferably 5 or higher, more preferably 5 to 1000, and even more preferably 10 to 500. On the other hand, the polymerization degree n of the block (B) having substantially no ion-exchange group is preferably 5 or higher, more preferably 5 to 1000, and even more preferably 10 to 500. If these polymerization degrees are within the ranges, the resulting polymer electrolyte membrane tends to sufficiently exhibit the properties of the respective blocks and the ion conductivity and water resistance are improved to further higher levels by the production method of the present invention and production of the respective blocks advantageously becomes easy. In consideration of the easiness in terms of the production, among them, a block copolymer is particularly preferable.

In the case where the ion conductive polymer to be employed in the present invention is a block copolymer or a graft copolymer, those capable of giving a membrane with a micro-phase separated structure when the copolymer is formed in the membrane. Herein, the micro-phase separated structure refers to, in the block copolymer or the graft copolymer, a structure in which different types of polymer segments are bonded by chemical bonds and therefore, micro-scale phase separation in size order of molecular chains is formed. For example, in the case of observation with a transmission electron microscope (TEM), the structure refers to a structure in which a fine phase (micro-domain) including density of the block (A) having an ion-exchange group higher than that of the block (B) having substantially no ion-exchange group and a fine phase (micro-domain) including density of the block (B) having substantially no ion-exchange group higher than that of the block (A) having an ion-exchange group in a mixed state and the structure has several nm or several hundred nm of the domain width of the respective micro-domain structures, that is, constant cycle length. Those having 5 nm to 100 nm micro-domain structures are preferable.

The membrane in which the above micro-phase separated structure is formed has a domain (a hydrophilic phase) relevant to the ion conductivity and a domain (a hydrophobic phase) relevant to the mechanical strength and water resistance and retains these characteristics to a high degree and is thus preferable as an ion conductive membrane for a fuel cell. Contrarily, with respect to the ion conductive polymer suitable for forming such a membrane, the solubilizing organic solvent used at the time of preparing the above polymer electrolyte solution tends to remain in either one of the domains and it is considerably difficult to remove the remaining solubilizing organic solvent in a conventional polymer electrolyte membrane production method. According to the present invention, even in the case of the membrane having the micro-phase separated structure and suitable for the ion conductive membrane for a fuel cell, an effect of remarkably decreasing the content of the remaining solubilizing organic solvent can be exhibited.

As described before, the polymer electrolyte membrane having the above micro-phase separated structure is easy to be formed if the ion conductive polymer is a block copolymer or a graft copolymer and in terms of more simplicity of production of the ion conductive polymer itself, a block copolymer is advantageous. Further, as the ion conductive polymer capable of exhibiting the micro-phase separated structure, those having a lower extent of branching are advantageous in some cases. The reason for this is not necessarily clear; however it is assumed that if an ion conductive polymer has a far extent of branching, the ion conductive polymer forms a complicated polymer micelle and becomes easy to incorporate the solubilizing organic solvent and as a result, the washing efficiency of the washing step (iii) is lowered. Since the above graft copolymer is an ion conductive polymer with a relatively far extent of branching, it may possibly easily incorporate the solubilizing organic solvent and also from such a viewpoint, the block copolymer is advantageous.

Typical examples of the block copolymer may include such as block copolymers having aromatic polyether structures and constituting with a block having an ion-exchange group and a block having substantially no ion-exchange group as described in, for example, JP-A Nos. 2005-126684 and 2005-139432 and block copolymers including polyarylene blocks having an ion-exchange group as described in International Publication WO 2006/95919.

As a particularly preferable block copolymer, those including one or more blocks constituted with the structure units having ion-exchange groups selected from the above (1a) to (4a) and one or more blocks constituted with the structure units having substantially no ion-exchange groups selected from the above (1b) to (4b) are exemplified and specific examples include those having the following blocks in combination as shown in the following Table 1.

Table 1

| Block copolymer | Structure unit constituting block having ion-exchange groups | Structure unit constituting block having substantially no ion-exchange group |
|---|---|---|
| <a> | (1a) | (1b) |
| <b> | (1a) | (2b) |
| <c> | (2a) | (1b) |
| <d> | (2a) | (2b) |
| <e> | (3a) | (1b) |
| <f> | (3a) | (2b) |
| <g> | (4a) | (1b) |
| <h> | (4a) | (2b) |

Further, preferable examples are block copolymers constituted with blocks in combination as described in <c>, <d>, <e>, <g>, and <h> and particularly preferable examples are block copolymers constituted with blocks in combination as described in <g> and <h>.

Specifically preferable block copolymers may include, for example, block copolymers with the following structures. In addition, a sulfonic acid group preferable as an ion-exchange group is exemplified and the term, "block" means that one or more blocks (A) having ion-exchange groups and one or more blocks (B) having substantially no ion-exchange group are included respectively, and the copolymerization mode is block copolymerization. In the following examples of the block copolymer, formation obtained by directly bonding the block having an ion-exchange group and the block having substantially no ion-exchange group are exemplified; however block copolymers obtained by bonding such blocks to each other through a proper atom or atomic group may also be included. The reference characters n and m in the formulas denote the polymerization degrees of the respective blocks as described above.

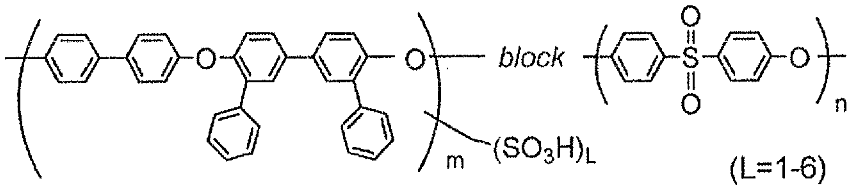

(1)

(L=1-6)

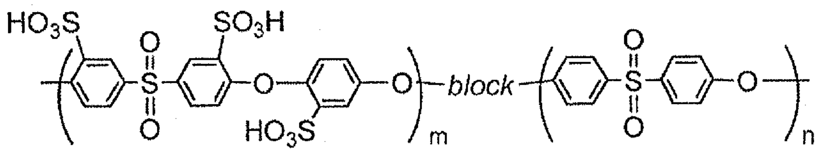

(2)

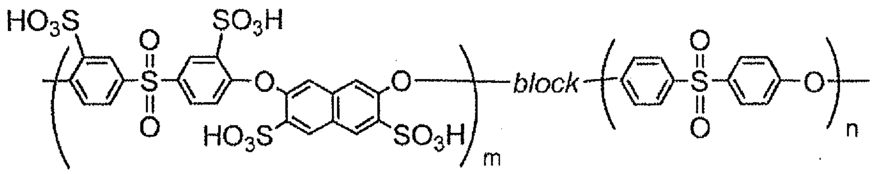

(3)

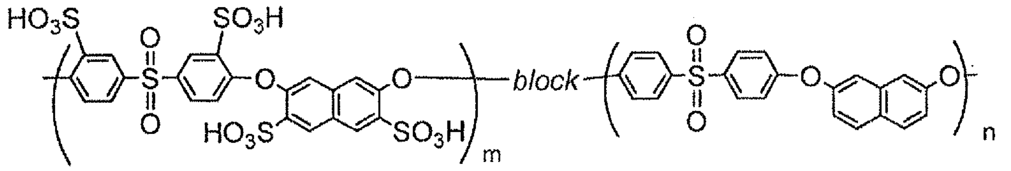 (4)

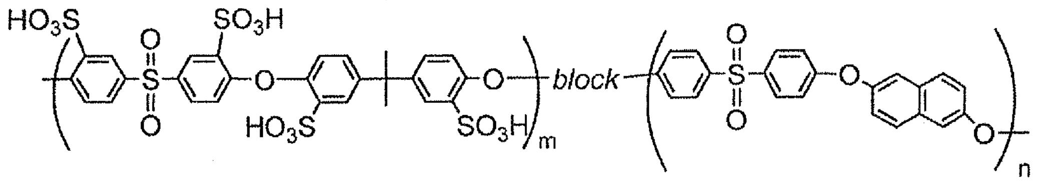 (5)

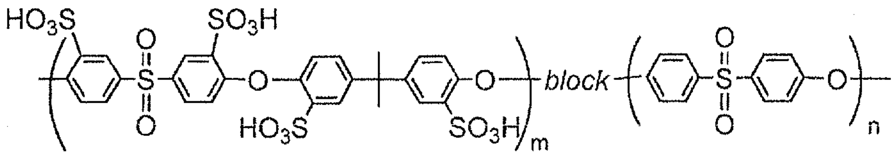 (6)

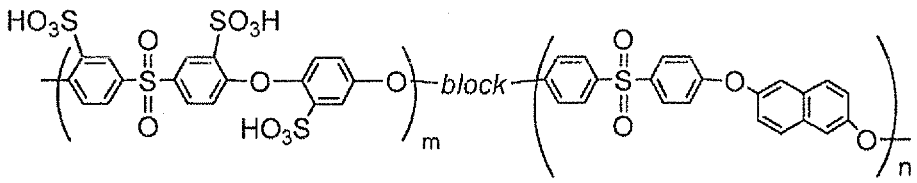 (7)

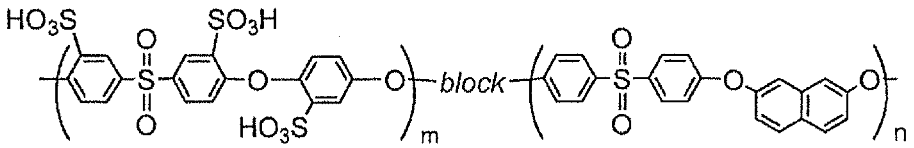 (8)

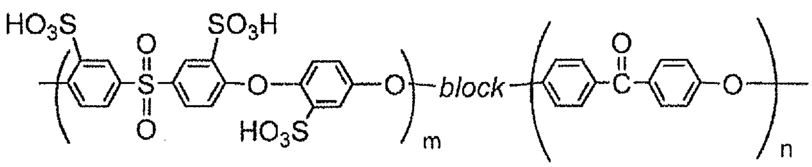 (9)

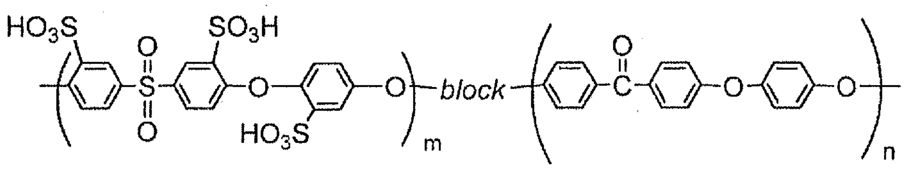 (10)

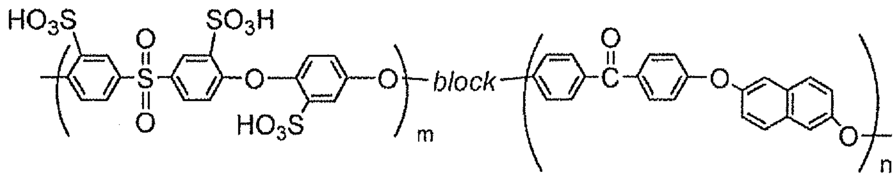
(11)

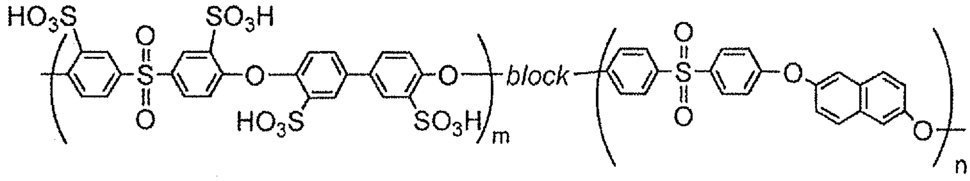
(12)

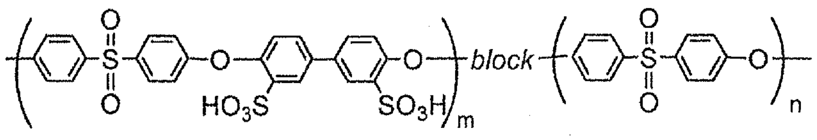
(13)

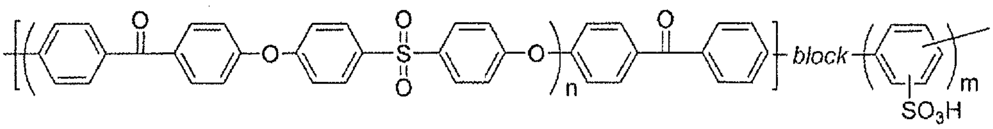
(14)

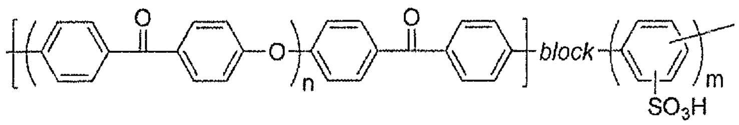
(15)

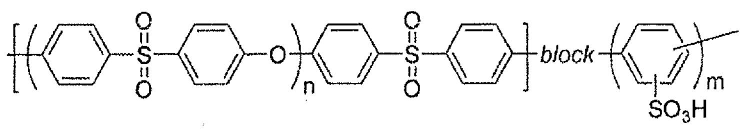
(16)

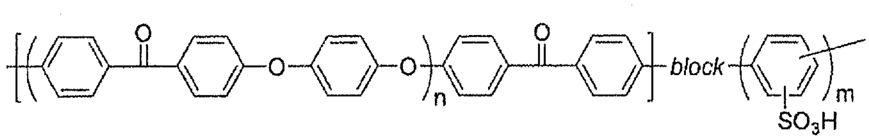
(17)

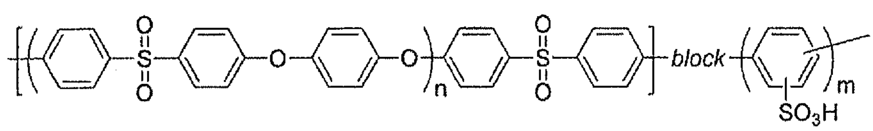
(18)

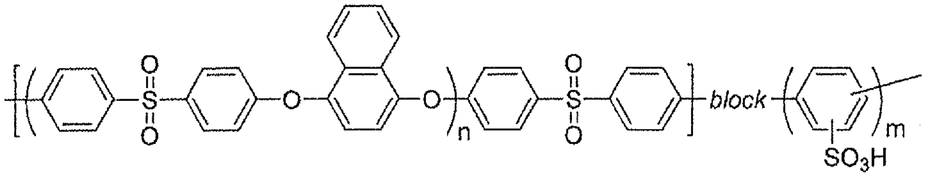
(19)

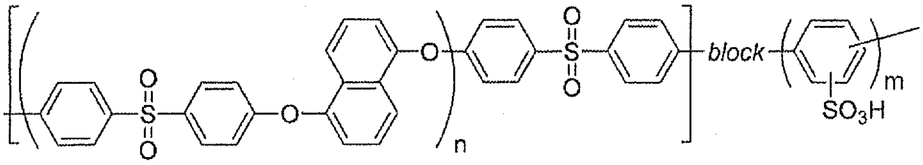
(20)

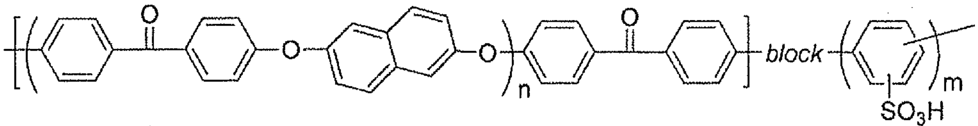
(21)

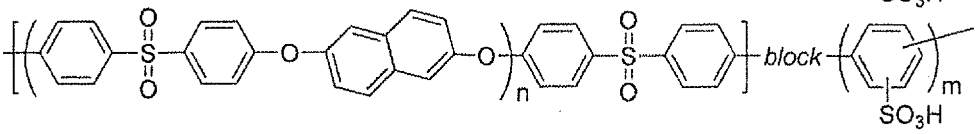
(22)

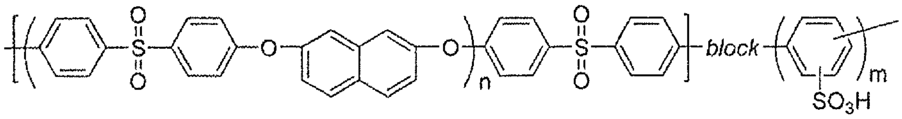
(23)

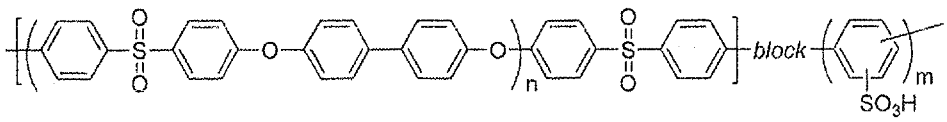
(24)

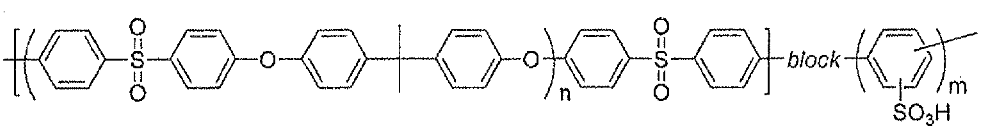
(25)

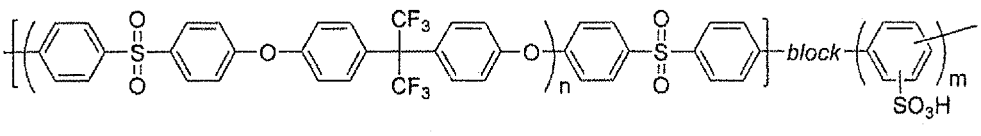
(26)

Among the block copolymers described above, those including a block defined by the following formula (4a') as the block (A) having an ion-exchange group are preferable.

$$-\left[Ar^9\right]_m-$$

(4a')

(wherein, $Ar^9$ and m are defined the same as described above.)

In the formula (4a'), the preferable range for the polymerization degree is as described above.

Further, $Ar^9$ has at least one ion-exchange group in the aromatic ring constituting the main chain. As the ion-exchange group, a proton-exchange group is preferable as described above and particularly, a sulfonic acid group is particularly preferable. With respect to the aromatic ring constituting $Ar^9$, particularly, in the block defined by the formula (4a'), those having the proton-exchange group directly bonded to the aromatic ring in the main chain are preferable.

As such preferable blocks, block copolymers shown in (14) to (26) can be exemplified for the blocks defined by the formula (4a') among the above examples and particularly, (16), (18), (22), (23), (24), and (25) are preferable.

As the ion conductive polymers suitable for the present invention, hydrocarbon type ion conductive polymers are described above in detail, and as already mentioned, the hydrocarbon type ion conductive polymers may partially have fluorine atoms. In this case, the content weight ratio of halogen atoms is adjusted to 15% by weight or less.

In the above exemplified hydrocarbon type ion conductive polymers, in terms of fluorine atoms per one structure unit constituting the hydrocarbon type ion conductive polymers, it may be adjusted to less than 0.05 atoms. In the case of using a hydrocarbon type ion conductive polymer containing fluorine atoms, when the polymer is used for a fuel cell, there is a risk that hydrogen fluoride may possibly be generated during the operation and corrode the fuel cell members and the polymer electrolyte membrane has to be produced under a condition that such hydrogen fluoride does not generate and thus the production becomes complicated in some cases.

Further, because of the same reason, also in the case of using a fluoro type ion conductive polymer and a hydrocarbon type ion conductive polymer in form of a mixture as a polymer electrolyte to be used in preparation of the polymer electrolyte solution, the content weight ratio of fluorine based on the total weight of the polymer electrolyte is preferably 15% by weight or less.

Further, the molecular weight of the ion conductive polymer to be used in the present invention, particularly, of the hydrocarbon type ion conductive polymer, is preferably 5000 to 1000000 and more preferably 15000 to 4000000 based on the number average molecular weight in terms of styrene.

The polymer electrolyte membrane produced by the present invention may contain an additive other than the ion conductive polymer as described above. Preferable additives are stabilizers for increasing the chemical stability such as oxidation resistance and radical resistance. Examples of the stabilizers are additives exemplified in JP-A Nos. 2003-201403, 2003-238678, and 2003-282096. Alternatively, phosphonic acid group-containing polymers defined by the following formulas described in JP-A Nos. 2005-38834 and 2006-66391 may be contained as the stabilizers.

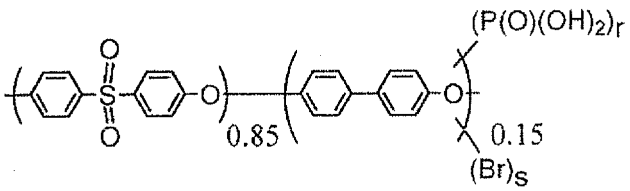

(r = 1 to 2.5; s = 0 to 0.5; and the numerals attached to the structure units denote the mole fraction of the structure units.)

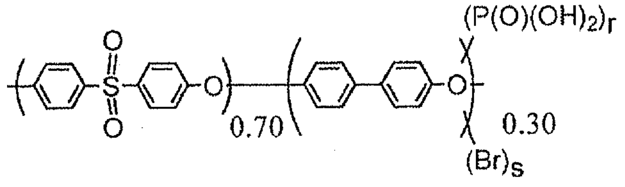

(r = 1 to 2.5; s = 0 to 0.5; and the numerals attached to the structure units denote the mole fraction of the structure units.) In the above formulas, the description, "$-(P(O)(OH)_2)_r$" and "$-(Br)_s$" mean that r in number of phosphonic acid groups exist on average and that s in number of bromo groups exist on average per one biphenyleneoxy unit.

The content of the stabilizers to be added is selected in a range without deteriorating the ion conductivity of the ion conductive polymer in the polymer electrolyte membrane, mechanical strength of the membrane and the like and it is preferably 20% by weight or less based on the total weight of the polymer electrolyte membrane: and if it is in this range, the characteristics such as ion conductivity of the polymer electrolyte membrane can be maintained and the effect of the stabilizers can easily be exhibited and therefore, it is preferable.

Next, the method for producing the polymer electrolyte membrane involving the above preparing step (i), coating step (ii) and washing step (iii) will be described.

At first, in the preparing step (i), a polymer electrolyte solution is prepared. Herein, as an organic solvent (solubilizing organic solvent) capable of dissolving a polymer electrolyte, specifically, those capable of giving the polymer electrolyte solution of at least one ion conductive polymers can be employed without particular limitation.

The above solubilizing organic solvent means an organic solvent capable of dissolving 1% by weight or more of a polymer electrolyte as a concentration in the resulting polymer electrolyte solution and preferably an organic solvent capable of dissolving 5 to 50% by weight of a polymer electrolyte and in the case of using such as polymers other than the ion conductive polymer (other polymers) and additives in combination, an organic solvent which can dissolve these other polymers and additives together is preferable.

From the viewpoint of the solubility to the preferable ion conductive polymers exemplified above, the solubilizing organic solvent is preferably non-protonic polar solvents such as dimethylformamide (DMF), dimethylacetamide (DMAc), N-methyl-2-pyrrolidone (NMP), and dimethyl sulfoxide (DMS). In general, because having high boiling points, these non-protonic polar solvents are relatively difficult to remove from the membrane by heating treatment as described in Prior Art and thus the washing step (iii) of the present invention exhibits an apparent removal effect.

As the solubilizing organic solvent to be used for preparation of the polymer electrolyte solution, non-protonic polar solvents are preferable, and at the time of obtaining the polymer electrolyte solution, other solvents may be used while being mixed. The other solvents are preferably those having the solubility to the polymer electrolyte within the above range and soluble in the initial washing solvent and specific examples include alcohols and alkylene glycol monoalkyl ethers such as methanol, ethanol, propanol, ethylene glycol monomethyl ether and ethylene glycol monoethyl ether As described, since the soluble organic solvent can dissolve the polymer electrolyte, the solubilizing organic solvent has high affinity to the polymer electrolyte and as a result is very difficult to be removed by normal heating treatment; however according to the production method of the present invention, such a solubilizing organic solvent can be removed efficiently. Further, a solvent which is relatively hard to be dissolved in a preferable initial washing solvent described below but easy to be evaporated and removed by carrying out heating treatment before the washing step (iii) may be mixed with the above solubilizing organic solvent to prepare the polymer electrolyte solution. Examples of the solvent can include chlorine type solvents such as dichloromethane, chloroform, 1,2-dichloroethane, chlorobenzene and dichlorobenzene.

The solubilizing organic solvent preferably contains at least one organic solvent having a boiling point of 150°C or higher at 101.3 kPa (1 atomic pressure). If all of the organic solvents constituting the solubilizing organic solvent have a boiling point lower than 150°C at 101.3 kPa (1 atomic pressure), the polymer electrolyte membrane to be obtained by casting the polymer electrolyte solution in the coating step (ii) described below tends to cause uneven appearance defects. In the polymer electrolyte membrane causing such uneven appearance defects, even if generation of wrinkles or the like is sufficiently prevented, which is an object of the present invention, it becomes consequently difficult to obtain a fuel cell with excellent performances in some cases.

The coating step (ii) is a step for obtaining a polymer electrolyte membrane intermediate on a supporting substrate by coating (casting) the polymer electrolyte solution obtained in the preparation step (i) onto the supporting substrate, and such a polymer electrolyte membrane intermediate contains ion conductive polymers, additives added based on the necessity and solubilizing organic solvents. Herein, as a method for coating by casting, conventionally known various types of methods such as a roller coating method, a dip coating method, a spray coating method, a spinner coating method, a curtain coating method, a slot coating method, a screen printing method can ben employed. Further, sheets of the supporting substrate may be used and also the supporting substrate may be fed continuously to continuously cast the polymer electrolyte solution onto the supporting substrate and in accordance with the type of these supporting substrates, a proper method for casting should be selected.

As described above, with respect to the polymer electrolyte membrane intermediate formed on the supporting substrate, if the solubilizing organic solvent is removed to a certain extent before the washing step (iii), it is preferable from the viewpoint of the productivity and reduction of the cost of the washing step (iii). The indication in the case of previous removal of the solubilizing organic solvent is preferably that the content of the solubilizing organic solvent is adjusted to 40% by weight or less and more preferably 30% by weight or less based on the total weight of the polymer electrolyte membrane intermediate. As described, if the content of the solubilizing organic solvent in the polymer electrolyte membrane intermediate is lower, there is an advantage that productivity is improved such as shortening of the treatment time for the washing step (iii) and thus it is preferable to properly optimize the content of the solubilizing organic solvent in relation to the treatment time for removing the solubilizing organic solvent or the like.

As a means for removing the solubilizing organic solvent before the washing step (iii), usually, a means for removing the solubilizing organic solvent by drying out such as heating treatment and blowing treatment may be employed commonly and particularly, drying by heating treatment is preferable. In the case of sheets of a supporting substrate, the content of the solubilizing organic solvent in the polymer electrolyte membrane intermediate can be lowered by heating with using a drying oven, a hot plate, or the like. Alternatively, in the case where a laminate film comprising the polymer electrolyte membrane intermediate and the supporting substrate is continuously obtained by continuously feeding the supporting substrate, the continuous laminate film obtained by casting the polymer electrolyte solution is passed through a heating furnace to lower the content of the solubilizing organic solvent.

Further, before the washing step (iii), acid treatment may be carried out from the viewpoint that the ion conductive polymer in the polymer electrolyte membrane intermediate, preferably the proton-exchange groups of the proton conductive polymer is converted to be in form of a free acid. Such acid treatment may be carried out by a method of brining the laminate film comprising the polymer electrolyte membrane intermediate and the supporting substrate into contact with an aqueous acid solution. In this case, as an acid, sulfuric acid, hydrochloric acid, or the like is preferably used in terms of cost reduction. The acid concentration of the aqueous acid solution is preferably 0.5 to 6 N and treatment time is selected from 10 minutes to several days.

As the above supporting substrate, those having heat resistance and size stability to an extent sufficient for withstanding the preliminary drying conditions after casting the solubilizing organic solvent are preferable and also substrates having solvent resistance to the solvent constituting the polymer electrolyte solution containing the solubilizing organic solvent and water resistance are preferable. Further, substrates peelable without firm adhesion of the polymer electrolyte membrane intermediate with the supporting substrate by heating treatment before the coating step (ii) and washing step (iii) are preferable. Herein, "having heat resistance and size stability" means that no thermal deformation is caused even in the heating treatment for the solvent removal after casting the above polymer electrolyte solution. Further, "having solvent resistance" means that the substrate itself is not substantially dissolved by the organic solvent constituting the polymer electrolyte solution. Furthermore, "having water resistance" means that the substrate itself is not substantially dissolved in an aqueous solution with pH of 4.0 to 7.0. Furthermore, "having solvent resistance" and "having water resistance" means the concept including that chemical deterioration is not caused by solvents or water and that no swelling or shrinkage is caused and the size stability is thus excellent.

As such a supporting substrate, a supporting substrate in which the surface to be casted is formed by a resin is suitable and generally a resin film is employed.

Examples of the supporting substrate comprising a resin film include polyolefin type films, polyester type films, polyamide type films, polyimide type films, fluoro resin type films and the like. Among them, since excellent in such as heat resistance, size stability, and solvent resistance, polyester type films and polyimide type films are preferable. Examples of the polyester type films include films comprising polyethylene terephthalate, polyethylene naphthalate, polybutylene terephthalate and aromatic polyesters and among them, films comprising polyethylene terephthalate are industrially preferably in terms of not only the above characteristics but also the wide availability and cost.

In the case where the supporting substrate is fed continuously, a substrate suitable for continuous membrane formation is preferable. The substrate suitable for continuous membrane formation refers to a substrate which can be kept as a rolled material and is durable under external force such as a certain degree of bending without being cracked. Among supporting substrates, resin films can be in form a long, continuous, and flexible substrate and thus it can be kept and used as a rolled material and is preferably usable even in the case of continuous membrane formation of the polymer electrolyte membrane.

The supporting substrate may be subjected to surface treatment capable of changing the wettability of the supporting substrate surface in accordance with the uses. Herein, the treatment capable of changing the wettability of the supporting substrate surface may include common techniques such as treatment for hydrophilicity including corona treatment, plasma treatment or the like and treatment for hydrophobicity including fluorination treatment.

The polymer electrolyte membrane intermediate can be obtained on the supporting substrate through the coating step (ii) and since the solubilizing organic solvent which is not removed by drying remains in the polymer electrolyte membrane intermediate, the solubilizing organic solvent is extracted with a washing solvent and is removed from the polymer electrolyte membrane intermediate.

As an initial washing solvent to be used in the washing step (iii), water or a mixed solvent of water with a lower alcohol (a primary alcohol having 1 to 3 carbon atoms) is preferable. When the above solubilizing organic solvent is extracted in the initial washing solvent, the concentration of the solubilizing organic solvent is adjusted to in a range of 2500 ppm by weight or lower. Particularly, water is preferably used as the initial washing solvent in terms of the easiness of post treatment and cost.

In the case where water is used as the initial washing solvent, the water is preferable not to contain metal ion

components and generally water with resistivity of 17 MΩ•cm or more at 25°C selected from ion exchanged water, pure water, and ultrapure water is preferably used. Water having such resistivity can easily be made available if a commercialized pure water production apparatus or the like is used.

In the washing step (iii), the concentration of the solubilizing organic solvent in the washing solvent brought into contact with the polymer electrolyte membrane intermediate may be adjusted to finally 2500 ppm by weight or lower and it is preferable to keep the concentration constantly in a range of 2500 ppm by weight or lower during the washing step (iii). That is, although the solubilizing organic solvent concentration in the washing solvent is increased due to elution of the solubilizing organic solvent into the washing solvent from the polymer electrolyte membrane intermediate, the concentration of the solubilizing organic solvent in the washing solvent during brought into contact with the polymer electrolyte membrane intermediate is preferably controlled to be constantly 2500 ppm by weight or lower. The concentration of the solubilizing organic solvent in the washing solvent is preferably 1000 ppm by weight or lower, more preferably 500 ppm by weight or lower, and even more preferably 50 ppm by weight or lower. If the concentration of the solubilizing organic solvent in the washing solvent brought into contact with the polymer electrolyte membrane intermediate is controlled in the above range, the appearance defects such as wrinkles or the like are drastically lowered at the time of peeling the supporting substrate from the laminate film comprising the polymer electrolyte membrane obtained through the washing step (iii) and supporting substrate and thus an extremely good polymer electrolyte membrane can be obtained. Further, since the polymer electrolyte membrane obtained by the present invention contains a remaining solubilizing organic solvent in a remarkably lowered concentration, if the polymer electrolyte membrane is used as the ion conductive membrane for a fuel cell, there is also an advantage that poisoning of the catalytic component of a catalyst layer of a fuel cell can be suppressed with the solubilizing organic solvent. Among the above examples of the solubilizing organic solvent, non-protonic polar solvents (DMSO, NMP, DMAc, and the like) having good solubility to the ion conductive polymers relatively easily poison the catalytic component and in the case where such non-protonic polar solvents are used for producing the polymer electrolyte solution, the production method of the present invention can not only sufficiently prevent the appearance defects such as wrinkles but also prevent poisoning of the catalytic component of a catalyst layer of a fuel cell and thus enables to give a fuel cell extremely excellent in the characteristics.

Next, a specific method for bringing the washing solvent into contact with the polymer electrolyte membrane intermediate in the washing step (iii) will be described.

In the case where the supporting substrate employed is in form of a sheet, a washing tank containing the above initial washing solvent is prepared and the contact can be performed by a series of operation of setting the laminate film comprising the polymer electrolyte membrane intermediate and the supporting substrate in the washing tank, immersing the laminate film in a manner that the film is sufficiently brought into contact with the initial washing solvent, and taking out the laminate film out of the washing tank after a prescribed time. Further, in the case of carrying out preliminary heating treatment before the washing step (iii), for example, an operation of keeping the laminate film before washing in a hot air blowing oven for a prescribed time may be performed.

Further, in the case where the supporting substrate is a continuous film, the contact can be performed by feeding the continuous laminate film comprising the polymer electrolyte membrane and the supporting substrate as described above to the washing tank containing the initial washing solvent in a manner that the polymer electrolyte membrane intermediate is brought into contact with the washing solvent for a prescribed time. Further, in the case of carrying out preliminary heating treatment before the washing step (iii), the preliminary heating treatment may be carried out by providing a drying furnace between a coating apparatus for the coating step (ii) and the washing tank for the washing step (iii), feeding the laminate film comprising the polymer electrolyte membrane formed by applying the polymer electrolyte solution by the coating apparatus and the supporting substrate into the drying furnace.

As a method for controlling the concentration of the solubilizing organic solvent in the washing solvent in the above range, in the case where the supporting substrate is in form of a sheet, a small piece of the laminate film comprising the polymer electrolyte membrane intermediate and the supporting substrate is previously prepared and subjected to a preliminary experiment of the washing step (iii) to determine washing conditions such as the amount of the initial washing solvent to be brought into contact with the polymer electrolyte membrane intermediate, contact time and temperature. That is, the washing conditions can be determined by immersing the small piece in a prescribed amount of the initial washing solvent, thereafter sampling the washing solvent containing the solubilizing organic solvent extracted from the polymer electrolyte membrane intermediate in the initial washing solvent every prescribed intervals, and quantitatively determining the concentration of the solubilizing organic solvent in the sampled washing solution by gas chromatography or the like in a range in which the solubilizing organic solvent concentration is kept 2500 ppm by weight or lower. Hereinafter, the washing step (iii) in the case where the supporting substrate is in form of a sheet is called as batch type washing. In this batch type washing, if the solubilizing organic solvent concentration in the washing solvent by one time washing exceeds 2500 ppm by weight, the washing may be repeated until the solubilizing organic solvent concentration in the washing solvent is adjusted to 2500 ppm by weight or lower.

Further, in the case where the continuous laminate film comprising the polymer electrolyte membrane intermediate and the supporting substrate is passed through the washing tank containing the initial washing solvent, it can

be carried out by sampling the washing solvent in the washing tank at prescribed intervals and quantitatively determining the solubilizing organic solvent concentration in the washing solvent in the same manner as described above during the time of passing the continuous laminate film; or installing a sensor capable of monitoring the solubilizing organic solvent concentration in the washing solvent in the washing tank to monitor the range of keeping the organic solvent concentration 2500 ppm by weight or lower and passing the continuous laminate film in the washing tank. Hereinafter, the washing step (iii) in the case where the supporting substrate is the continuous laminate film is called as continuous washing. In this continuous washing, in the case where a plurality of washing tanks are employed and the continuous laminate film is successively passed there through, the solubilizing organic solvent concentration in the washing solvent may be kept 2500 ppm by weight or lower in at least the final washing tank (the washing tank through which the laminate film is finally passed).

In the case where the continuous washing is employed, in order to keep the solubilizing organic solvent concentration in the washing solvent 2500 ppm by weight or lower, the solubilizing organic solvent in the washing solvent in the washing tank can also be lowered by successively or continuously loading a new initial washing solvent additionally and making the washing solvent overflow from the washing tank. Further, additional loading of the initial washing solvent as described above and continuous overflow of the washing solvent out of the washing tank also makes it possible to stably keep the solubilizing organic solvent concentration in the washing solvent be 2500 ppm by weight or lower, and in the case where a sensor for monitoring the solubilizing organic solvent concentration is installed in the washing tank, the amount of the initial washing solvent to be loaded newly can also be adjusted by automatic control based on the solubilizing organic solvent concentration measured by the sensor. As a typical example of the sensor, electrodes for measuring conductivity can be employed as the sensor in the case of using pure water as the initial washing solvent. That is, the electrodes for measuring conductivity are installed in the washing solvent in the washing tank to measure the conductivity and thus the solubilizing organic solvent concentration in the washing solvent can be calculated.

With respect to the washing conditions in the case of the above batch washing and the continuous washing, the temperature is selected in a range from room temperature to 100°C, preferably from 30 to 80°C, and more preferably from 30 to 60°C. Similarly, the pressure may be reduced pressure or pressurized pressure and since the operation is generally easy at normal pressure (about 101.3 kPa), and it is preferable. They may be properly optimized in accordance with the type of the ion conductive polymer and the type of the solubilizing organic solvent to be used.

Further, the washing tank to be used for the batch type washing or the continuous washing, an apparatus for stirring the washing solvent in the washing tank may be provided if the apparatus does not cause any damages on the polymer electrolyte membrane intermediate or the supporting substrate.

As described above, the laminate film obtained by laminating the polymer electrolyte membrane on the supporting substrate can be obtained. If the concentration of the solubilizing organic solvent remaining in the polymer electrolyte membrane (hereinafter, sometimes referred to as "residual concentration") is 6000 ppm by weight or lower based on the total weight of the polymer electrolyte membrane, generation of wrinkles or the like can sufficiently be prevented at the time of removing the supporting substrate. As described before, the polymer electrolyte membrane having wrinkles or the like sometimes has a problem that it is difficult to form an electrode catalyst layer with desired shape and size on the membrane due to the looseness and in some cases, strains are applied to the membrane from the wrinkles as starting points and thus they sometimes also affect durability of MEA.

Therefore, the residual concentration of the solubilizing organic solvent is more preferable as it is lower and it is preferably 2500 ppm by weight or lower, more preferably 1500 ppm by weight or lower, furthermore preferably 1000 ppm by weight or lower, and particularly preferably 100 ppm by weight or lower. Wrinkles or the like can be decreased by lowering the residual concentration of the polymer electrolyte membrane as described above. The residual concentration can be quantitatively measured by extracting the solubilizing organic solvent remaining in the polymer electrolyte membrane by dissolving the obtained polymer electrolyte membrane in a proper solvent or by soxhlet extraction and subjecting the extracted solvent to gas chromatography. Further, in preparation of the polymer electrolyte solution in the preparation step (i), the present inventors have found that a non-protonic polar solvent is preferable as the solubilizing organic solvent; however if the non-protonic polar solvent remains in the polymer electrolyte membrane, generation of wrinkles or the like becomes more significant. Accordingly, the polymer electrolyte membrane with more lowered residual concentration of the non-protonic polar solvent more apparently exhibits the effect of the present invention. If DMSO or NMP among the non-protonic polar solvents remains in the polymer electrolyte membrane, in addition to generation of wrinkles or the like, in the case of assembly of a fuel cell, the power generation performance and durability of the fuel cell tend to be worsened. To avoid such inconvenience, in the case where DMSO or NMP is used, it is more advantageous as the residual concentration is lower.

The cause of the generation of wrinkles or the like is not necessarily clear; however if the residual concentration in the polymer electrolyte membrane is higher, the organic solvent remains partially in the polymer electrolyte membrane and difference of the residual concentration is generated in the membrane and the difference is presumed to cause the generation of the wrinkles or the like. Occurrence of the difference is apparently more significant as the amount of the solvent remaining in the polymer electrolyte membrane is more increased. The present inventors have found that generation of the wrinkles or the like can be suppressed if the residual concentration is suppressed to 6000 ppm by weight or less and it has been considerably difficult to obtain such a polymer electrolyte membrane with a method of removing the solubilizing organic solvent by mainly conventional heating treatment.

Further, in the description of the above washing step (iii), the laminate film comprising mainly the polymer electrolyte membrane intermediate and the supporting substrate is employed for the description, the polymer electrolyte membrane intermediate may be preliminarily peeled from the supporting substrate and brought into contact with the washing solvent for washing. The polymer electrolyte membrane capable of decreasing the catalytic poisoning in the fuel cell can also be obtained in this manner. However, it is more preferable to carry out washing in form of the laminate film in which the polymer electrolyte membrane intermediate is laminated on the supporting substrate in terms of prevention of wrinkles or the like and it is also advantageous that productivity can be increased since the washing can be carried out more efficiently. Further, in the case where the washing step (iii) is continuous washing, prevention of scratches, bending or the like during the transportation to the washing tank can be expected. According to the present invention, suppression for wrinkles or like can be expected also in washing of the polymer electrolyte membrane intermediate peeled from the supporting substrate.

The supporting substrate is removed from the laminate film comprising the supporting substrate and the polymer electrolyte membrane and is through the washing step (iii) to obtain a polymer electrolyte membrane. Removal of the supporting substrate can be carried out by conventional peeling treatment and even if such treatment is carried out, a polymer electrolyte membrane with excellent appearance can be obtained. In the case of using water preferable as the initial washing solvent, the polymer electrolyte membrane to be obtained through the washing step (iii) contains water. With respect to the polymer electrolyte membrane containing water as described above, the ion conductive polymer itself becomes more difficult to be deteriorated with the lapse of time and tends to be advantageous in the handling. Such a polymer electrolyte membrane has a water content preferably of 5 to 50% by weight, and more preferably 10 to 50% by weight based on the total weight thereof. The polymer electrolyte membrane with a water content as described above can be suppressed from deterioration with the lapse of time and also made easy for handling and storage. Further, if the solubilizing organic solvent is caused to remove from the polymer electrolyte membrane intermediate only by heating treatment without execution of the washing step (iii) of the present invention, the polymer electrolyte membrane receives a large quantity of heat energy and thus the ion conductive polymer contained in the polymer electrolyte membrane is easily deteriorated. In terms of avoiding the above inconvenience, the production method of the present invention is extremely useful.

The thickness of the polymer electrolyte membrane obtained in the above manner is not particularly limited and may be properly optimized in accordance with the uses of the polymer electrolyte membrane. In the case of using it as the ion conductive membrane for fuel cells, it is preferably 10 to 300 μm. To keep the strength for practical use of the polymer electrolyte membrane, the thickness is preferably 10 μm or thicker. On the other hand, in the case of the membrane with thickness of 300 μm or thinner, the membrane resistance becomes small and the characteristics of the fuel cell to be obtained are further improved and therefore, it is preferable. Further, as the thickness is thinner, the washing efficiency in the washing step (iii) tends to become better. From such a viewpoint, the thickness is preferably 100 μm or thinner, more preferably 50 μm or thinner, and even more preferably 40 μm or thinner. The thickness can be controlled in accordance with the ion conductive polymer concentration in the polymer electrolyte membrane and the coating thickness on the substrate in the coating step (ii).

It is expected that the polymer electrolyte membrane obtained by the present invention can be used in various fields, and particularly the polymer electrolyte membrane is suitable for an ion conductive membrane to be used in electrochemical devices such as a fuel cell or the like. The polymer electrolyte membrane becomes an ion conductive membrane with remarkably high durability and has high utility value.

Further, in the case of using the polymer electrolyte membrane as such an ion conductive membrane, it can be expected that excellent handing property and an effect of easily forming an electrode catalyst layer with desired form and size on the ion conductive membrane can be provided.

Accordingly, the polymer electrolyte membrane produced by the production method of the present invention is remarkably useful as an ion conductive membrane of a highly functional polymer electrolyte fuel cell.

Next, a fuel cell using the polymer electrolyte membrane obtained by the production method of the present invention will be described.

At the time of assembling a fuel cell, based on the necessity, the polymer electrolyte membrane is preferably used after removal of water contained therein by drying treatment.

A fuel cell can be produced by joining catalyst components and conductive substances as current collectors to both surfaces of the ion conductive membrane, commonly a proton conductive membrane and the polymer electrolyte membrane obtained by the production method of the present invention can be used preferably as the ion conductive membrane.

Herein, as the catalyst components, those capable of activating redox reaction of hydrogen or oxygen may be employed without any limitation and conventionally known components can be employed, however, fine particles of

platinum or platinum-based alloys are preferably used. The fine particles of platinum or platinum-based alloys are often used while being supported on granular or fibrous carbon such as activated carbon and graphite.

Further, the platinum supported on carbon is mixed with an alcohol solution of a perfluoroalkyl sulfonic acid resin as a polymer electrolyte to give a paste, which is applied to a gas diffusion layer and/or polymer electrolyte membrane and dried to form catalyst layers. As a specific method, conventionally known methods such as methods described in J. Electrochem. Soc.: Electrochemical Science and Technology, 1988, 135(9), 2209 are exemplified.

With respect to the conductive substances as current collectors, conventionally known materials can also be employed and porous carbon woven fabrics, carbon nonwoven fabrics, or carbon paper is preferable for efficient transfer of raw materials gases to the catalyst.

The fuel cell produced in this manner can be used in various modes using hydrogen gas, reformed hydrogen gas, or methanol as a fuel.

The above description illustrates preferred embodiments of the present invention, however, the preferred embodiments of the present invention disclosed above are illustration only and the scope of the present invention is not limited to the illustrated embodiments. The scope of the present invention is shown by the claims and further includes all alternation within the meaning and scope of the description and equivalence of the claims.

Hereinafter, the present invention will be described with reference to examples; however, it is not intended that the present invention be limited to the illustrated examples. Physical property measurement methods employed in examples are described below.

(Measurement of ion exchange capacity)

A polymer electrolyte membrane to be subjected toe measurement was dried until the membrane had a constant weight measured using a halogen water meter set at a heating temperature of 105°C to determine the dry weight. Next, being immersed in 5 mL of an aqueous solution of 0.1 mol/L sodium hydroxide, the polymer electrolyte membrane was left for 2 hours after 50 mL of ion exchanged water was added. Thereafter, 0.1 mol/L of hydrochloric acid was gradually added to the solution in which the polymer electrolyte membrane was immersed to carry out titration, and then the neutralization point was determined. The ion exchange capacity (unit: meq/g, hereinafter referred to as "IEC") of the polymer electrolyte membrane was calculated from the dry weight of the polymer electrolyte membrane and the amount of hydrochloric acid used for the neutralization.

(Measurement of amount of solubilizing organic solvent)

The measurement of the amount of the solubilizing organic solvent remaining in the polymer electrolyte membrane (amount of residual solvent) and the amount of the solubilizing organic solvent in the washing solvent (amount of solubilizing organic solvent in washing solvent) was carried out as following.

In the examples, the amount of the residual solvent in the polymer electrolyte membrane was measured after previously dissolving the polymer electrolyte membrane in dimethylformamide. Further, the amount of the solubilizing organic solvent in washing solvent was measured by subjecting the washing solvent as it was to the measurement. GC-MS apparatus: QP-5000 (manufactured by Shimadzu Corporation)

Analysis method: Standard solutions of a solvent used as the solubilizing organic solvent were prepared and a calibration curve was produced while plotting the set concentrations of the standard solution (mg/L) in the abscissa axis and the peak surface area values in the ordinate axis. The amount of the residual solvent in the polymer electrolyte membrane was calculated according to the following calculation expression.

Amount of solubilizing organic solvent in washing solvent

(ppm) =(Peak surface area value - y intercept of the calibration curve) / Slope of the calibration curve

(Evaluation of appearance of polymer electrolyte membrane)

The obtained polymer electrolyte membrane was peeled from a supporting substrate and a sample with a size

of 20 cm×40 cm was cut out and samples with the same size of 20 cm×40 cm as that of the previously cut out sample were each cut out at the point apart from 3 m in the unrolling direction from the previously cutting out point in total 3 samples. In the cut out samples of the polymer electrolyte membrane, the number of defects such as wrinkles observed visually was measured and the average was calculated. As the value was higher, the appearance was more inferior and as the value was lower, the appearance was better.

(Water content measurement method)

Similarly to the case of measuring the ion exchange capacity, using a halogen water content meter, drying was carried out at 105°C until the weight became constant to determine the dry weight of the polymer electrolyte membrane. Next, the membrane was immersed in hot water at 80°C for 2 hours and taken out and wiped to remove adhering water and the water absorption weight was determined. The water content was calculated from the water absorption weight and dry weight.

(Synthesis Example 1)

Under argon atmosphere, 142.2 parts by weight of DMSO, 55.6 parts by weight of toluene, 5.7 parts by weight of sodium 2, 5-dichlorobenzenesulfonate, 2.1 parts by weight of the following chlorine-terminated polyether sulfone (Sumikaexcel PES 5200P, manufactured by Sumitomo Chemical Co., Ltd.),

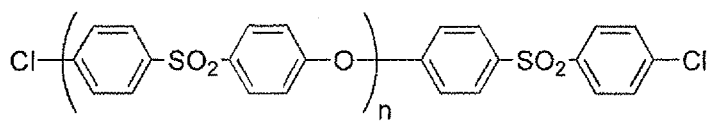

and 9.3 parts by weight of 2,2'-dipyridyl were loaded to a flask equipped with an azeotropic distillation apparatus and stirred. Thereafter, the bath temperature was increased to 100°C and toluene was removed by thermal distillation under reduced pressure to carry out azeotropic dehydration of moisture in the system and after cooling to 65°C, the pressure was turned to normal pressure. Next, 15.4 parts by weight of bis(1,5-cyclooctadiene) nickel (O) was added thereto and the temperature was increased to 70°C and the obtained mixture was stirred for 5 hours at the same temperature. After cooling, a large quantity of methanol was added to the reaction solution to precipitate a polymer, which was separated by filtration. Thereafter, washing with 6 mol/L of aqueous hydrochloric acid solution and filtration were repeated several times and thereafter the filtrate was washed until it became neutral and vacuum drying was carried out to obtain 3.0 parts by weight of an aimed polyarylene type block copolymer as follows. IEC was 2.2 meq/g and the number average molecular weight (Mn) and the weight average molecular weight (Mw) in terms of polystyrene determined by gel permeation chromatography (GPC) were 103000 and 257000, respectively. The obtained copolymer was defined as BCP-1. The reference characters n and m show the polymerization degrees of the repeating structures constituting the respective blocks of the block copolymer.

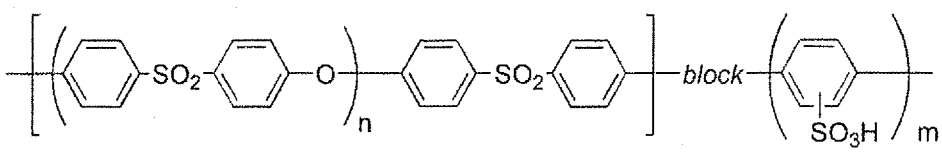

(Synthesis Example 2)

The following phosphonic acid group-containing polymer (in the following drawing, the average number r of phosphoric acid groups per one biphenyloxy unit was 1.6 and the average number s of bromine atoms was 0.1 or less) was obtained in the same production method of AD-2 described in the paragraphs (0058) to (0059) of JP-A No. 2006-66391. The polymer was defined as AD-1.

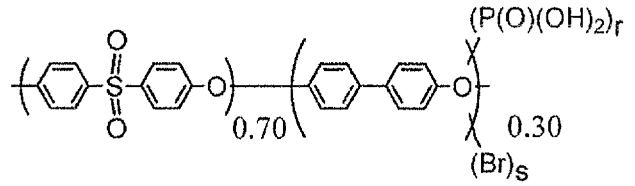

(Membrane formation condition 1)

The solution casting membrane formation was carried out using a continuous drying furnace. A mixture of the block copolymer BCP-1 obtained in Synthetic Example 1 and the phosphonic acid group-containing polymer AD-1 obtained in Synthetic Example 2 (weight ratio of BCP-1 : AD-1 = 90 : 10) was dissolved in DMSO to prepare a polymer electrolyte solution 1 having a concentration of the mixture of 10% by weight. The obtained polymer electrolyte solution 1 was continuously casted onto a supporting substrate (width 300 mm, polyethylene terephthalate (PET) film (E5000 grade, manufactured by Toyobo Co., Ltd.) having a length of 500 m) using a slot die and the film was continuously fed to the drying furnace to remove the solvent and obtain a polymer electrolyte membrane intermediate 1 (33 μm) on the supporting substrate. The drying conditions were as follows. The concentration of DMSO remaining in the polymer electrolyte membrane intermediate 1 was about 15% by weight based on the total weight of the polymer electrolyte membrane intermediate 1.

Drying conditions: temperature 60°C, time 66 minutes.

In the above drying conditions, the temperature is the set temperature of the continuous drying furnace and the time expresses a passing time from the time point when an arbitrary point of the laminate film comprising the polymer electrolyte membrane intermediate and the supporting substrate came into the continuous drying furnace to the time point where the arbitrary point came out of the furnace. The membrane formation conditions mentioned below will be also similarly described.

(Membrane formation condition 2)

The solution casting membrane formation was carried out using a continuous drying furnace. A mixture of the block copolymer BCP-1 obtained in Synthetic Example 1 and the phosphonic acid group-containing polymer AD-1 obtained in Synthetic Example 2 (weight ratio of BCP-1 : AD-1 = 90 : 10) was dissolved in DMSO to prepare a polymer electrolyte solution 1 having a concentration of the mixture of 10% by weight. The obtained polymer electrolyte solution 2 was continuously casted onto a supporting substrate (width 300 mm, polyethylene terephthalate (PET) film (E5000 grade, manufactured by Toyobo Co., Ltd.) having a length of 500 m) using a slot die and the film was continuously fed to the drying furnace to remove the solvent and obtain a polymer electrolyte membrane intermediate 2 (33 μm) on the supporting substrate. The drying conditions were as follows. The concentration of DMSO remaining in the polymer electrolyte membrane intermediate 2 was about 15% by weight based on the total weight of the polymer electrolyte membrane intermediate 1.

Drying conditions: temperature 60°C, time 66 minutes.

(Example 1)

The polymer electrolyte membrane intermediate 1 obtained in the membrane formation conditions 1 was immersed in an aqueous 2N hydrochloric acid solution for 2 hours and thereafter immersed in water used as an initial washing solvent for 2 hours. After the immersion, the washing solvent was sampled and the DMSO concentration was determined to find it was 2500 ppm by weight. The polymer electrolyte membrane intermediate was taken out of the washing solvent and dried by air blow and thereafter peeled from the supporting substrate to obtain a polymer electrolyte membrane 1. As a result of TEM observation, the membrane had micro-phase separated structure and both hydrophilic phase and hydrophobic phase formed a continuous phase.

(Example 2)

The same operation as that of Example 1 was carried out to immerse the polymer electrolyte membrane intermediate 2, except the amount of water as the initial washing solvent was changed. After the immersion, the washing solvent was sampled and DMSO concentration was determined to find it was 1000 ppm by weight. Thereafter, the

polymer electrolyte membrane intermediate was taken out in the same manner as in Example 1 and air-dried and peeled from the supporting substrate to produce a polymer electrolyte membrane 2. As a result of TEM observation, the membrane had micro-phase separated structure and both hydrophilic phase and hydrophobic phase formed a continuous phase.

(Example 3)

The same operation as that of Example 1 was carried out to immerse the polymer electrolyte membrane intermediate 1, except the polymer electrolyte membrane intermediate 1 obtained in the membrane formation conditions 1 was used and the amount of water as the initial washing solvent was changed. After the immersion, the washing solvent was sampled and DMSO concentration was determined to find it was 500 ppm by weight. Thereafter, the polymer electrolyte membrane intermediate 1 was taken out in the same manner as in Example 1 and air-dried and peeled from the supporting substrate to produce a polymer electrolyte membrane 3. As a result of TEM observation, the membrane had micro-phase separated structure and both hydrophilic phase and hydrophobic phase formed a continuous phase.

(Example 4)

The same operation as that of Example 1 was carried out to immerse the polymer electrolyte membrane intermediate 2, except the polymer electrolyte membrane intermediate 2 obtained in the membrane formation conditions 2 was used and the amount of water as the initial washing solvent was changed. After the immersion, the washing solvent was sampled and DMSO concentration was determined to find it was 50 ppm by weight. Thereafter, the polymer electrolyte membrane intermediate 2 was taken out in the same manner as in Example 1 and air-dried and peeled from the supporting substrate to produce a polymer electrolyte membrane 4. As a result of TEM observation, the membrane had micro-phase separated structure and both hydrophilic phase and hydrophobic phase formed a continuous phase.

(Example 5)

The same operation as that of Example 1 was carried out to immerse the polymer electrolyte membrane intermediate 2, except the polymer electrolyte membrane intermediate 2 obtained in the membrane formation conditions 2 was used and the amount of water as the initial washing solvent was changed. After the immersion, the washing solvent was sampled and DMSO concentration was determined to find it was 5 ppm by weight. Thereafter, the polymer electrolyte membrane intermediate 2 was taken out in the same manner as in Example 1 and air-dried and peeled from the supporting substrate to produce a polymer electrolyte membrane 4. As a result of TEM observation, the membrane had micro-phase separated structure and both hydrophilic phase and hydrophobic phase formed a continuous phase.

(Example 6)

When the polymer electrolyte membrane intermediate obtained in the membrane formation conditions 2 was used and continuously washed using water as the initial washing solvent after treatment with an aqueous 2N sulfuric acid solution for 45 minutes. When the washing solvent in the final washing tank was sampled and DMSO concentration was determined to find it was 2 ppm by weight. The polymer electrolyte membrane intermediate was taken out of the washing solvent and air-dried and peeled from the supporting substrate to produce a polymer electrolyte membrane 1. As a result of TEM observation, the membrane had micro-phase separated structure and both hydrophilic phase and hydrophobic phase formed a continuous phase.

(Comparative Example 1)

The same operation as that of Example 1 was carried out to immerse the polymer electrolyte membrane intermediate 1, except the polymer electrolyte membrane intermediate 1 obtained in the membrane formation conditions 1 was used and the amount of water as the initial washing solvent was changed. After the immersion, the washing solvent was sampled and DMSO concentration was determined to find it was 3000 ppm by weight. Thereafter, the polymer electrolyte membrane intermediate 1 was taken out in the same manner as in Example 1 and air-dried and peeled from the supporting substrate to produce a polymer electrolyte membrane 5. As a result of TEM observation, the membrane had micro-phase separated structure and both hydrophilic phase and hydrophobic phase formed a continuous phase.

(Comparative Example 2)

The same operation as that of Example 1 was carried out to immerse the polymer electrolyte membrane intermediate 2, except the polymer electrolyte membrane intermediate 2 obtained in the membrane formation conditions 2 was used and the amount of water as the initial washing solvent was changed. After the immersion, the washing solvent was sampled and DMSO concentration was determined to find it was 5000 ppm by weight. Thereafter, the polymer electrolyte membrane intermediate 2 was taken out in the same manner as in Example 1 and air-dried and peeled from the supporting substrate to produce a polymer electrolyte membrane 6. As a result of TEM observation, the membrane had micro-phase separated structure and both hydrophilic phase and hydrophobic phase formed a continuous phase.

The amounts of residual DMSO and water absorption ratios of the polymer electrolyte membranes 1 to 6 obtained in Examples 1 to 4 and Comparative Examples 1 to 2 were measured and the appearance evaluation was also carried out to determine the number of defects such as wrinkles. The results are shown in Table 2.

Table 2

| | Average value of amount of residual DMSO (ppm by weight) | Average value of the number of defects (parts/20 cm×40 cm) | Water absorption ratio (%) |
|---|---|---|---|
| Example 1 | 5620 | 1.0 | 15 |
| Example 2 | 2200 | 0.7 | 14 |
| Example 3 | 1120 | 0.3 | 13 |
| Example 4 | 90 | 0.3 | 14 |
| Example 5 | 10 | 0 | 22 |
| Example 6 | <10 | 0 | 21 |
| Comparative Example 1 | 6800 | 6.7 | 14 |
| Comparative Example 2 | 11200 | 8.0 | 15 |

**Claims**

**1.** A method for producing a polymer electrolyte membrane comprising:

(i) a preparation step for preparing a polymer electrolyte solution by dissolving a polymer electrolyte containing an ion conductive polymer having an ion-exchange group in an organic solvent capable of dissolving the polymer electrolyte,
(ii) a coating step for obtaining a polymer electrolyte membrane intermediate containing said ion conductive polymer by a solution casting method using the polymer electrolyte solution obtained in said step (i), and
(iii) a washing step for washing the polymer electrolyte membrane intermediate obtained in said step (ii) by bringing the polymer electrolyte membrane intermediate into contact with a washing solvent; wherein
the concentration of said organic solvent in the washing solvent brought into contact with the polymer electrolyte membrane intermediate in the washing step (iii) is 2500 ppm by weight or lower.

**2.** The method for producing a polymer electrolyte membrane according to claim 1, wherein said coating step (ii) is a step for obtaining the polymer electrolyte membrane intermediate on a supporting substrate by casting the polymer electrolyte solution onto the supporting substrate and thereafter carrying out heating treatment.

**3.** The method for producing a polymer electrolyte membrane according to claim 1 or 2, wherein said polymer electrolyte solution contains at least one organic solvent having a boiling point of 150°C or higher at 101.3 kPa.

**4.** The method for producing a polymer electrolyte membrane according to any of claims 1 to 3, wherein said ion conductive polymer includes an aromatic ring constituting the main chain and the ion-exchange group directly bonded or indirectly bonded through another atom or an atomic group to the aromatic ring constituting the main chain.

**5.** The method for producing a polymer electrolyte membrane according to any of claims 1 to 3, wherein said ion conductive polymer is a polymer having an aromatic ring constituting the main chain and optionally further having an aromatic ring in a side chain, and in which the ion-exchange group is directly bonded to the aromatic ring of at least one of the aromatic ring constituting the main chain and the aromatic ring in a side chain.

**6.** The method for producing a polymer electrolyte membrane according to any of claims 1 to 5, wherein said ion conductive polymer includes:

one or more structure units having an ion-exchange group selected from the following (1a), (2a), (3a) and (4a),

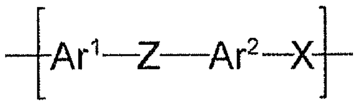

(1a)

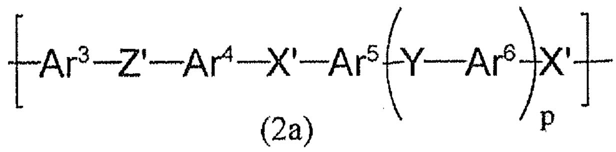

(2a)

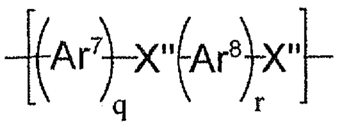

(3a)

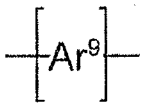

(4a)

(wherein, $Ar^1$ to $Ar^9$ each independently denote a divalent aromatic group having an aromatic ring constituting the main chain, optionally further having an aromatic ring in a side chain and having an ion-exchange group bonded directly to either the aromatic ring constituting the main chain or the aromatic ring in a side chain; Z and Z' each independently denote -CO- or $-SO_2-$; X, X', and X" each independently denote -O- or -S-; Y denotes a direct bond or a group defined by the following formula (100); p denotes 0, 1, or 2; and q and r each independently denote 1, 2, or 3) and
one or more structure units having no ion-exchange group selected from the following (1b), (2b), (3b) and (4b),

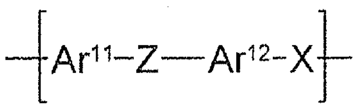

(1b)

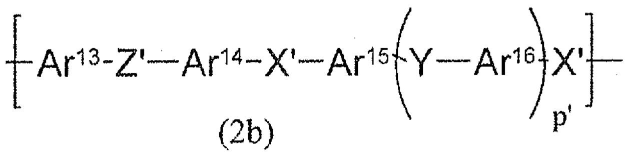

(2b)

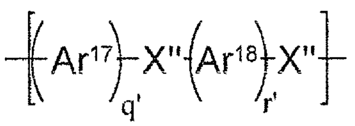

(3b)

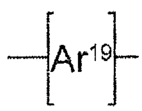

(4b)

(wherein, $Ar^{11}$ to $Ar^{19}$ each independently denote a divalent aromatic group optionally having a substituent group; Z and Z' each independently denote -CO- or $-SO_2-$; X, X', and X" each independently denote -O- or -S-; Y denotes a direct bond or a group defined by the following formula (100); p' denotes 0, 1, or 2; and q' and r' each independently denote 1, 2, or 3);

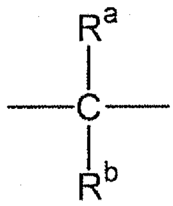

(100)

(wherein, $R^a$ and $R^b$ each independently denote a hydrogen atom, an optionally substituted alkyl group having 1 to 10 carbon atoms, an optionally substituted alkoxy group having 1 to 10 carbon atoms, an optionally substituted aryl group having 6 to 18 carbon atoms, an optionally substituted aryloxy group having 6 to 18 carbon atoms, or an optionally substituted acyl group having 2 to 20 carbon atoms and $R^a$ and $R^b$ may be bonded with each other to form a ring in combination with the carbon atoms to which they bond).

**7.** The method for producing a polymer electrolyte membrane according to any of claims 1 to 6, wherein said ion conductive polymer is a copolymer including one or more blocks (A) having an ion-exchange group and one or more blocks (B) having substantially no ion-exchange group, respectively, in which the copolymerization mode is block copolymerization or graft copolymerization.

**8.** The method for producing a polymer electrolyte membrane according to claim 7, wherein said ion conductive polymer includes a block in which the ion-exchange groups is directly bonded to the aromatic ring constituting the main chain as said blocks (A) having ion-exchange groups.

**9.** The method for producing a polymer electrolyte membrane according to claim 7 or 8, wherein said ion conductive polymer includes, as said blocks (A) a having ion-exchange group, a block represented by the following formula (4a')

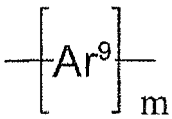

(4a')

(wherein, $Ar^9$ is defined the same as described above and m denotes a polymerization degree of the structure unit constituting the block) and, as said blocks (B) having substantially no ion-exchange group, one or more blocks selected from the following formulas (1b') (2b') and (3b')

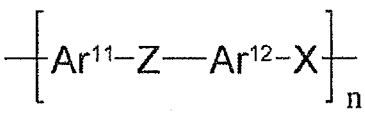

(1b')

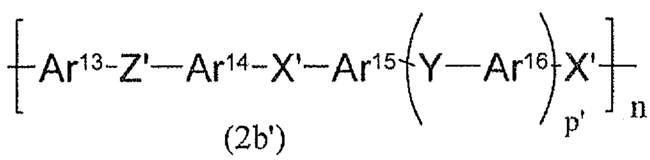

(2b')

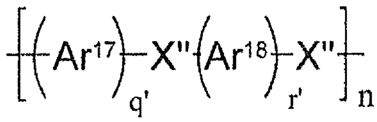

(3b')

(wherein, $Ar^{11}$ to $Ar^{18}$ each independently denote a divalent aromatic group and herein, the divalent aromatic group may be substituted with an alkyl group having 1 to 20 carbon atoms, an alkoxy group having 1 to 20 carbon atoms, an aryl group having 6 to 20 carbon atoms, an aryloxy group having 6 to 20 carbon atoms, and an acyl group having 2 to 20 carbon atoms; n denotes a polymerization degree of the structure unit constituting the block and an integer of 5 or higher; and other reference characters denote the same as described above).

**10.** The method for producing a polymer electrolyte membrane according to any of claims 1 to 9, wherein said polymer electrolyte membrane has a structure microphase-separated into at least two or more micro-phases.

**11.** The method for producing a polymer electrolyte membrane according to claim 10, wherein said ion conductive polymer is a copolymer including one or more blocks (A) having an ion-exchange group and one or more blocks (B) having substantially no ion-exchange group, respectively, in which the copolymerization mode is block copolymerization or graft copolymerization and said polymer electrolyte membrane includes a micro-phase separated structure containing a phase having density of the blocks (A) having an ion-exchange group higher than that of the blocks (B) having substantially no ion-exchange group and a phase having density of the blocks (B) having substantially no ion-exchange group higher than that of the blocks (A) having an ion-exchange group.

**12.** The method for producing a polymer electrolyte membrane according to any of claims 1 to 11, wherein said ion-exchange group is a sulfonic acid group.

**13.** The method for producing a polymer electrolyte membrane according to any of claims 1 to 12, wherein said ion conductive polymer is a hydrocarbon type ion conductive polymer having 15% by weight or lower of halogen atoms based on the elemental weight ratio.

**14.** A polymer electrolyte membrane obtained by the production method according to any of claims 1 to 13.

**15.** The polymer electrolyte membrane according to claim 14, wherein the content of said organic solvent in the polymer electrolyte membrane is 6000 ppm by weight or less based on the total weight of the polymer electrolyte membrane.

**16.** A polymer electrolyte membrane comprising an polymer electrolyte containing an ion conductive polymer having a ion-exchange group, wherein the content of an organic solvent capable of dissolving said polymer electrolyte in said polymer electrolyte membrane is 6000 ppm by weight or less based on the total weight of the polymer electrolyte membrane.

**17.** A membrane-electrode assembly having the polymer electrolyte membrane according to any of claims 14 to 16.

**18.** A fuel cell comprising the membrane-electrode assembly according to claim 17.

**INTERNATIONAL SEARCH REPORT**

International application No. PCT/JP2007/073258

A. CLASSIFICATION OF SUBJECT MATTER
*H01B13/00*(2006.01)i, *C08G75/23*(2006.01)i, *C08G81/00*(2006.01)i, *C08J5/22*(2006.01)i, *H01B1/06*(2006.01)i, *H01M8/02*(2006.01)i, *H01M8/10*(2006.01)i

According to International Patent Classification (IPC) or to both national classification and IPC

B. FIELDS SEARCHED

Minimum documentation searched (classification system followed by classification symbols)
H01B13/00, H01B1/06, H01M8/02, H01M8/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2006-307051 A (Shin-Etsu Chemical Co., Ltd.), 09 November, 2006 (09.11.06), Claims; Par. Nos. [0025], [0026] (Family: none) | 14-16<br>17-18<br>1-13 |
| Y | JP 2005-060516 A (Asahi Kasei Corp.), 10 March, 2005 (10.03.05), Par. No. [0031] (Family: none) | 17-18 |
| Y | JP 2003-173798 A (Toyota Motor Corp.), 20 June, 2003 (20.06.03), Full text (Family: none) | 17-18 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 31 January, 2008 (31.01.08) | 12 February, 2008 (12.02.08) |
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

International application No.
PCT/JP2007/073258

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2006-302600 A (Asahi Glass Co., Ltd.), 02 November, 2006 (02.11.06), Claims; Par. No. [0059] (Family: none) | 17-18 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2005125705 A
- JP 20051257805 A
- JP 2005126684 A
- JP 2005139432 A
- WO 200695919 A
- JP 2003201403 A
- JP 2003238678 A
- JP 2003282096 A
- JP 2005038834 A
- JP 2006066391 A

### Non-patent literature cited in the description

- *J. Electrochem. Soc.: Electrochemical Science and Technology,* 1988, vol. 135 (9), 2209